# FASCICULE DE BREVET EUROPEEN

(11) **EP 3 079 546 B1**
(45) Date de publication et mention de la délivrance du brevet: **06.01.2021**
(21) Numéro de dépôt: 14821778.9
(22) Date de dépôt: 02.12.2014
(51) Int. Cl.: A47J 43/07

(54) **APPAREIL ÉLECTROMÉNAGER COMPORTANT UN DISPOSITIF RANGE-CORDON**
ELEKTRISCHES HAUSHALTSGERÄT MIT EINER KABELFÜHRUNGSVORRICHTUNG
ELECTRIC HOUSEHOLD APPLIANCE COMPRISING A CABLE-TIDY DEVICE

(30) Priorité: 09.12.2013 FR 1362323
(43) Date de publication de la demande: 19.10.2016
(73) Titulaire: SEB S.A., 69130 Ecully (FR)
(72) Inventeur: SMIT, Robert, F-65290 Louey (FR); LAFOND, Jean-Marie, F-65420 Ibos (FR); PEYRAS, Lionel, F-65100 Lourdes (FR)
(74) Mandataire: SEB Développement
(86) Numéro de dépôt international: PCT/FR2014/053122
(87) Numéro de publication internationale: WO 2015/086953

(56) Documents cités:
- DE-A1- 19 737 131
- FR-A3- 2 540 372
- US-A- 3 476 331

## Description

La présente invention concerne de manière générale les appareils électroménagers munis d'un cordon d'alimentation électrique.

La présente invention concerne plus particulièrement les appareils électroménagers comportant un dispositif range-cordon.

La présente invention concerne notamment, mais non exclusivement, les appareils électroménagers de préparation culinaire comportant un dispositif range-cordon.

Il est connu du document US 3 476 331 un appareil électroménager comportant un dispositif range-cordon prévu pour enrouler le cordon. Toutefois ce dispositif range-cordon est agencé sous une face inférieure du boîtier. L'utilisation de ce dispositif range-cordon nécessite de soulever le boîtier de l'appareil.

Il est connu du document EP 0 679 600 un appareil électroménager comportant un dispositif range-cordon débouchant sur une face latérale du boîtier de l'appareil. Toutefois ce dispositif range-cordon comporte une cavité agencée dans le boîtier, qui présente un orifice de taille restreinte prévu pour le passage du cordon électrique. Un tel dispositif est plus aisément accessible, mais le rangement du cordon électrique dans le boîtier peut s'avérer fastidieux.

Un appareil électroménager selon les caractéristiques du préambule de la revendication 1 est connu du document DE19737131.

Un objet de la présente invention est de proposer un appareil électroménager comportant un dispositif range-cordon, qui permette une manipulation simple et aisée du cordon d'alimentation électrique.

Un autre objet de la présente invention est de proposer un appareil électroménager comportant un dispositif range-cordon, qui présente une construction économique.

Ces objets sont atteints avec un appareil électroménager, notamment un appareil électroménager de préparation culinaire, comportant un boîtier et un cordon d'alimentation électrique s'étendant hors du boîtier, le boîtier présentant une partie inférieure prévue pour reposer sur un plan d'appui, le boîtier comprenant une paroi extérieure présentant une cavité extérieure pour enrouler une partie du cordon d'alimentation électrique, la cavité extérieure étant agencée en dehors de la partie inférieure, la cavité extérieure étant ménagée dans une portion bombée de la paroi extérieure, du fait que la paroi extérieure présente une portion externe convexe entourant la cavité extérieure, que la cavité extérieure est annulaire, que la cavité extérieure présente une paroi périphérique raccordée à la portion externe convexe, une paroi de fond et une paroi intérieure, et qu'au moins un organe de retenue proéminent est issu de la paroi périphérique. En d'autres termes, l'ensemble de la paroi extérieure entourant la cavité extérieure est convexe. Ces dispositions permettent de créer un logement annulaire facilitant la mise en place et la retenue du cordon d'alimentation électrique. Ces dispositions facilitent le rangement du cordon d'alimentation électrique du fait que la cavité extérieure prévue pour recevoir le cordon d'alimentation électrique est bien accessible. Tout d'abord, il n'est pas nécessaire de soulever le boîtier de l'appareil pour ranger le cordon d'alimentation électrique. De plus l'agencement de la cavité extérieure dans une portion bombée de la paroi extérieure du boîtier facilite le rangement du cordon d'alimentation électrique dans la cavité extérieure.

Selon une forme de réalisation avantageuse, le boîtier comprend une coque dans laquelle est formée la cavité extérieure. Cette disposition permet de réaliser la cavité extérieure en une seule pièce. Une telle pièce peut être aisément réalisée par moulage.

Avantageusement encore, la cavité extérieure présente une géométrie circulaire. Cette disposition permet de simplifier la réalisation de la cavité extérieure. Cette disposition permet aussi de faciliter l'enroulement du cordon d'alimentation électrique dans la cavité extérieure.

Avantageusement encore, la cavité extérieure annulaire entoure un noyau issu de la paroi extérieure. Cette disposition permet de simplifier la réalisation de la cavité extérieure.

Avantageusement encore, le noyau est proéminent par rapport à la portion externe convexe de la paroi extérieure. En d'autres termes, le noyau est proéminent par rapport au bord extérieur de la cavité extérieure annulaire. Cette disposition permet de faciliter l'enroulement du cordon d'alimentation électrique dans la cavité extérieure.

Avantageusement encore, le noyau présente au moins une encoche pour maintenir le cordon d'alimentation électrique entre la partie du cordon d'alimentation électrique agencée dans la cavité extérieure annulaire et une autre partie du cordon d'alimentation électrique s'étendant à l'extérieur de la cavité extérieure annulaire. Cette disposition permet de faciliter la retenue du cordon d'alimentation électrique. Cette disposition permet aussi de faciliter l'enroulement du cordon d'alimentation électrique selon différentes longueurs.

Avantageusement alors, l'encoche débouche dans la cavité extérieure annulaire. Cette disposition permet de faciliter la retenue du cordon d'alimentation électrique.

Avantageusement encore, le cordon d'alimentation électrique comporte une section non circulaire présentant une grande dimension et une petite dimension et l'encoche présente une largeur inférieure à la plus grande dimension et supérieure à la plus petite dimension. Cette disposition permet de faciliter le coincement du cordon d'alimentation électrique dans l'encoche. Cette disposition permet aussi de faciliter le dégagement du cordon d'alimentation électrique de l'encoche, par rotation.

Avantageusement encore, au moins un organe de retenue proéminent est issu d'une paroi périphérique de la cavité extérieure. Cette disposition permet de faciliter la retenue du cordon d'alimentation électrique agencé dans la cavité extérieure, notamment lorsque le cordon d'alimentation électrique préalablement enroulé se desserre.

Avantageusement alors, une ouverture est ménagée au fond de la cavité extérieure à l'aplomb de l'organe de retenue proéminent ou de chaque organe de retenue proéminent. Cette disposition permet de faciliter une réalisation par moulage.

Avantageusement encore, l'appareil comporte trois organes de retenue proéminents agencés en étoile issus de la paroi périphérique de la cavité extérieure. Cette disposition permet d'obtenir une retenue efficace du cordon d'alimentation électrique sans compliquer le retrait du cordon d'alimentation électrique.

Avantageusement encore, l'encoche débouche dans la cavité extérieure annulaire en regard du ou d'un des organes de retenue proéminents. Cette disposition permet de faciliter le blocage du cordon d'alimentation électrique.

Avantageusement encore, un passage pour le cordon d'alimentation électrique est ménagé dans une paroi interne de la cavité extérieure. Cette disposition permet de simplifier la construction de l'appareil.

Avantageusement encore, la coque est fendue depuis un bord externe jusqu'au passage. Cette disposition permet de faciliter le montage du cordon d'alimentation électrique dans l'appareil.

Avantageusement encore, le passage est ménagé dans une paroi de fond de la cavité extérieure. Cette disposition permet de simplifier la construction de l'appareil en maximisant la capacité de la cavité extérieure recevant le cordon d'alimentation électrique.

L'invention sera mieux comprise à l'étude d'un exemple de réalisation, pris à titre nullement limitatif, illustré dans les figures annexées, dans lesquelles :
- la figure 1 est une vue en coupe d'un exemple de réalisation d'un appareil électroménager selon l'invention,
- la figure 2 est une vue en perspective d'un élément de boîtier de l'appareil illustré sur la figure 1,
- la figure 3 est une vue en perspective selon une autre orientation de l'élément de boîtier illustré sur la figure 2, sans le cordon d'alimentation électrique,
- la figure 4 est une vue en coupe d'une section d'une forme de réalisation du cordon d'alimentation électrique illustré sur les figures 1 et 2,
- la figure 5 est une vue en perspective agrandie d'une partie de l'élément de boîtier selon l'orientation illustrée sur la figure 3.

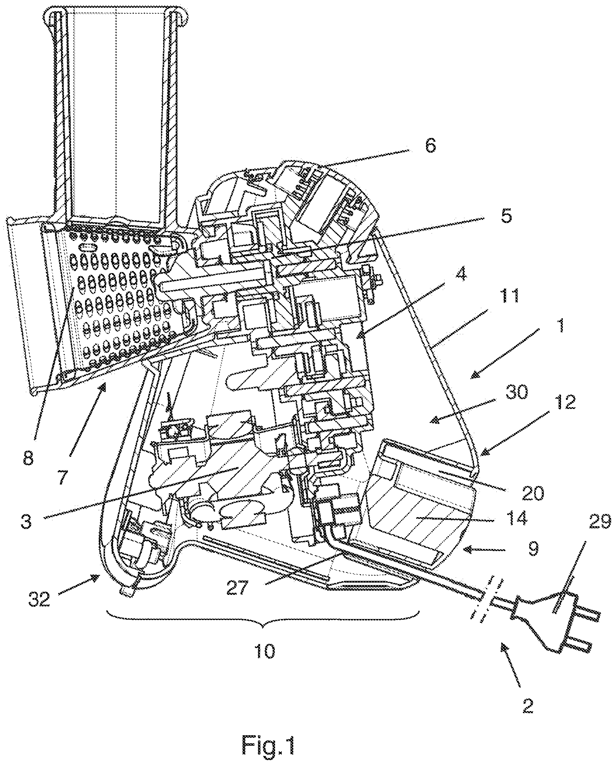

L'appareil électroménager illustré sur la figure 1 est un appareil électroménager de préparation culinaire prévu notamment pour râper ou pour émincer des aliments.

La présente invention concerne un appareil électroménager comportant un dispositif range-cordon 9 et n'est pas limitée aux appareils électroménagers de préparation culinaire.

L'appareil électroménager illustré sur la figure 1 comporte un boîtier 1 et un cordon d'alimentation électrique 2 s'étendant hors du boîtier 1. Le cordon d'alimentation électrique 2 présente une extrémité montée dans le boîtier 1 et une autre extrémité comportant une prise électrique 29, prévue par exemple pour un branchement sur le secteur. Pour simplifier les figures, le câblage électrique à l'intérieur du boîtier 1 n'est pas représenté.

Le boîtier 1 loge un moteur électrique 3 accouplé à un dispositif de transmission 4 présentant une sortie d'entraînement 5. Le dispositif de transmission 4 peut notamment comporter un réducteur. Le boîtier 1 présente un bouton de commande 6 pour piloter le fonctionnement du moteur électrique 3. Le boîtier 1 porte un accessoire de travail 7 comprenant un outil de travail 8 entrainé en rotation par la sortie d'entraînement 5.

Le boîtier 1 présente une partie inférieure 10 prévue pour reposer sur un plan d'appui. Le boîtier 1 comprend une paroi extérieure 11 présentant une cavité extérieure 20 pour enrouler une partie du cordon d'alimentation électrique 2. La cavité extérieure 20 appartient au dispositif range-cordon 9. La cavité extérieure 20 est agencée en dehors de la partie inférieure 10 du boîtier 1. De plus, la cavité extérieure 20 est ménagée dans une portion bombée 12 de la paroi extérieure 11.

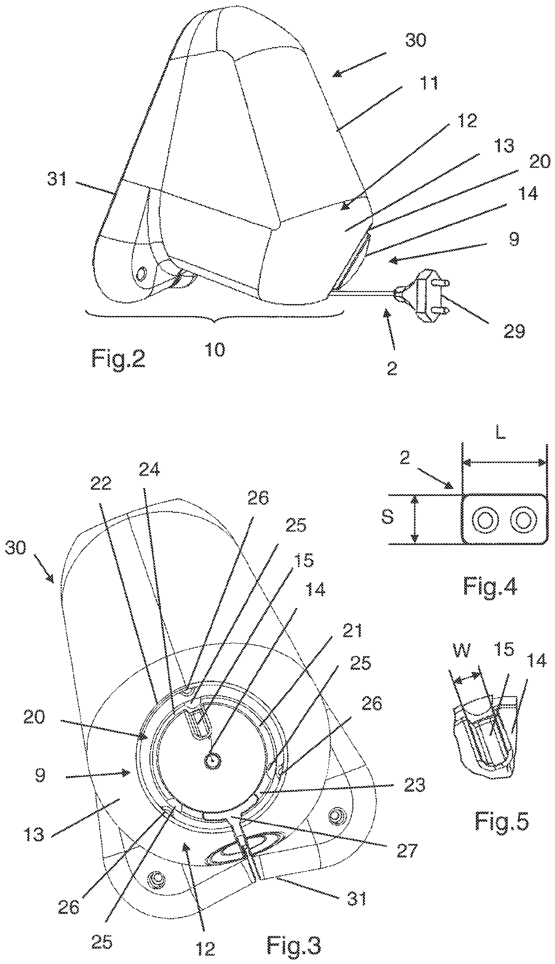

Plus particulièrement dans l'exemple de réalisation illustré sur les figures, le boîtier 1 comprend une coque 30 assemblée avec une façade 32. La coque 30 présente un bord externe 31, mieux visible sur les figures 2 et 3. La cavité extérieure 20 est formée dans la coque 30.

Tel que mieux visible sur les figures 2 et 3, la paroi extérieure 11 présente une portion externe convexe 13 entourant la cavité extérieure 20. La cavité extérieure 20 présente une géométrie circulaire.

Tel que représenté sur la figure 4, le cordon d'alimentation électrique 2 comporte une section non circulaire présentant une grande dimension L et une petite dimension S.

Selon un mode de réalisation préféré, la cavité extérieure 20 est annulaire. La cavité extérieure 20 présente une paroi périphérique 22 raccordée à la portion externe convexe 13 de la paroi extérieure 11, une paroi de fond 23 et une paroi intérieure 24. La cavité extérieure 20 annulaire entoure un noyau 14 issu de la paroi extérieure 11. Tel que mieux visible sur la figure 2, le noyau 14 est proéminent par rapport à la portion externe convexe 13 de la paroi extérieure 11. Plus particulièrement, le noyau 14 prolonge la courbure de la portion bombée 12. La largeur de la cavité extérieure 20 annulaire entre la paroi périphérique 22 et la paroi intérieure 24 est supérieure à la plus petite dimension S de la section du cordon d'alimentation électrique 2, et de préférence supérieure à la plus grande dimension L de la section du cordon d'alimentation électrique 2.

De manière préférée, le noyau 14 présente au moins une encoche 15 pour maintenir le cordon d'alimentation électrique 2 entre la partie du cordon d'alimentation électrique 2 agencée dans la cavité extérieure 20 annulaire et une autre partie du cordon d'alimentation électrique 2 s'étendant à l'extérieur de la cavité extérieure 20 annulaire.

Dans l'exemple de réalisation illustré sur les figures, l'encoche 15 débouche dans la cavité extérieure 20 annulaire. De préférence, l'encoche 15 s'étend jusqu'à la paroi de fond 23 de la cavité extérieure 20 annulaire. Tel que bien visible sur la figure 3, l'encoche 15 s'étend radialement dans le noyau 14.

Tel que représenté sur la figure 5, l'encoche 15 présente une largeur W. Avantageusement, la largeur W de l'encoche 15 est inférieure à la plus grande dimension L de la section du cordon d'alimentation électrique 2 et est supérieure à la plus petite dimension S de la section du cordon d'alimentation électrique 2.

De manière préférée, le dispositif range-cordon 9 comporte au moins un organe de retenue 26. Tel que représenté sur la figure 3, trois organes de retenue 26 proéminents sont issus de la paroi périphérique 22 de la cavité extérieure 20. Les trois organes de retenue 26 sont disposés au bord de la cavité extérieure 20 pour maximiser la capacité de rangement du cordon d'alimentation électrique 2. Les trois organes de retenue 26 sont agencés en étoile. Si désiré, au moins un organe de retenue 26 proéminent peut être issu de la paroi périphérique 22 de la cavité extérieure 20.

Pour faciliter la réalisation de la coque 30, une ouverture 25 est ménagée au fond de la cavité extérieure 20 à l'aplomb de chaque organe de retenue 26 proéminent.

Tel que bien visible sur la figure 3, l'encoche 15 débouche dans la cavité extérieure 20 annulaire en regard de l'un des organes de retenue 26 proéminents.

Tel que visible également sur la figure 3, un passage 27 pour le cordon d'alimentation électrique 2 (non représenté sur la figure 3) est ménagé dans une paroi interne 21 de la cavité extérieure 20. La paroi interne 21 est de préférence la paroi de fond 23 de la cavité extérieure 20. Pour faciliter le montage du cordon d'alimentation électrique 2, la coque 30 est fendue depuis le bord externe 31 jusqu'au passage 27. Le passage 27 s'étend avantageusement de part et d'autre de la partie fendue de la coque 30.

L'appareil électroménager selon l'invention illustré sur les figures 1 à 5 fonctionne et s'utilise de la manière suivante.

Le cordon d'alimentation électrique 2 sort du boîtier 1 par la cavité extérieure 20 accessible lorsque la partie inférieure du boîtier 1 repose sur un plan d'appui. L'utilisateur peut ranger le cordon d'alimentation électrique 2 dans la cavité extérieure 20 en enroulant le cordon d'alimentation électrique 2 dans la cavité extérieure 20 autour du noyau 14. La prise électrique 29 reste en dehors de la cavité extérieure 20. Lorsque l'utilisateur relâche le cordon d'alimentation électrique 2, les spires formées par le cordon d'alimentation électrique 2 tendent à se détendre et sont retenues par les organes de retenue 26 à l'intérieur de la cavité extérieure 20. L'utilisateur peut aussi raccourcir la partie libre du cordon d'alimentation électrique 2 s'étendant hors du boîtier 1 en bloquant le cordon d'alimentation électrique 2 dans l'encoche 15.

L'utilisateur peut ainsi adapter la longueur du cordon d'alimentation électrique 2 de manière particulièrement simple. La construction de l'appareil comportant le dispositif range-cordon 9 est simple et économique.

A titre de variante, le dispositif range-cordon 9 ne comporte pas nécessairement un noyau 14 agencé dans la cavité extérieure 20. La cavité extérieure 20 n'est pas nécessairement annulaire.

A titre de variante, la prise électrique 29 peut être logée au moins partiellement dans la cavité extérieure 20.

A titre de variante, la sortie d'entrainement 5 n'est pas nécessairement ménagée sur une face latérale du boîtier 1.

A titre de variante, l'accessoire de travail 7 n'est pas nécessairement amovible par rapport au boîtier 1.

A titre de variante, la partie inférieure 10 du boîtier 1 n'est pas nécessairement ménagée entièrement sous la coque 30.

A titre de variante, le dispositif range-cordon 9 n'est pas nécessairement ménagé dans une coque 30, mais peut par exemple être formé dans plusieurs éléments de boîtier adjacents formant une portion bombée de la paroi extérieure du boîtier.

La présente invention n'est nullement limitée à l'exemple de réalisation décrit, mais englobe de nombreuses modifications dans le cadre des revendications.

## Revendications

1. Appareil électroménager, notamment appareil électroménager de préparation culinaire, comportant un boîtier (1) et un cordon d'alimentation électrique (2) s'étendant hors du boîtier (1), le boîtier (1) présentant une partie inférieure (10) prévue pour reposer sur un plan d'appui, le boîtier (1) comprenant une paroi extérieure (11) présentant une cavité extérieure (20) pour enrouler une partie du cordon d'alimentation électrique (2), la cavité extérieure (20) étant agencée en dehors de la partie inférieure (10), la cavité extérieure (20) étant ménagée dans une portion bombée (12) de la paroi extérieure (11), **caractérisé en ce que** la paroi extérieure (11) présente une portion externe convexe (13) entourant la cavité extérieure (20), **en ce que** la cavité extérieure (20) est annulaire, **en ce que** la cavité extérieure (20) présente une paroi périphérique (22) raccordée à la portion externe convexe (13), une paroi de fond (23) et une paroi intérieure (24), et **en ce qu'**au moins un organe de retenue (26) proéminent est issu de la paroi périphérique (22).

2. Appareil électroménager selon la revendication 1, **caractérisé en ce qu'**une ouverture (25) est ménagée au fond de la cavité extérieure (20) à l'aplomb de l'organe de retenue (26) proéminent ou de chaque organe de retenue (26) proéminent.

3. Appareil électroménager selon l'une des revendications 1 ou 2,
**caractérisé en ce qu'**il comporte trois organes de retenue (26) proéminents agencés en étoile issus de la paroi périphérique (22) de la cavité extérieure (20).

4. Appareil électroménager selon l'une des revendications 1 à 3, **caractérisé en ce que** le boîtier (1) comprend une coque (30) dans laquelle est formée la cavité extérieure (20).

5. Appareil électroménager selon l'une des revendications 1 à 4, **caractérisé en ce que** la cavité extérieure (20) présente une géométrie circulaire.

6. Appareil électroménager selon la revendication 5, **caractérisé en ce que** la cavité extérieure (20) annulaire entoure un noyau (14) issu de la paroi extérieure (11).

7. Appareil électroménager selon la revendication 6, **caractérisé en ce que** le noyau (14) présente au moins une encoche (15) pour maintenir le cordon d'alimentation électrique (2) entre la partie du cordon d'alimentation électrique (2) agencée dans la cavité extérieure (20) annulaire et une autre partie du cordon d'alimentation électrique (2) s'étendant à l'extérieur de la cavité extérieure (20) annulaire.

8. Appareil électroménager selon la revendication 7, **caractérisé en ce que** l'encoche (15) débouche dans la cavité extérieure (20) annulaire.

9. Appareil électroménager selon l'une des revendications 7 ou 8,
**caractérisé en ce que** le cordon d'alimentation électrique (2) comporte une section non circulaire présentant une grande dimension (L) et une petite dimension (S) et **en ce que** l'encoche (15) présente une largeur (W) inférieure à la plus grande dimension (L) et supérieure à la plus petite dimension (S).

10. Appareil électroménager selon l'une des revendications 7 à 9, **caractérisé en ce que** l'encoche (15) débouche dans la cavité extérieure (20) annulaire en regard du ou d'un des organes de retenue (26) proéminents.

11. Appareil électroménager selon l'une des revendications 1 à 10,
**caractérisé en ce qu'**un passage (27) pour le cordon d'alimentation électrique (2) est ménagé dans une paroi interne (21) de la cavité extérieure (20).

12. Appareil électroménager selon les revendications 4 et 11, **caractérisé en ce que** la coque (30) est fendue depuis un bord externe (31) jusqu'au passage (27).

13. Appareil électroménager selon l'une des revendications 11 ou 12,
**caractérisé en ce que** le passage (27) est ménagé dans une paroi de fond (23) de la cavité extérieure (20).

## Patentansprüche

1. Haushaltsgerät, insbesondere Haushaltsgerät zur Nahrungsmittelzubereitung, das ein Gehäuse (1) und ein Netzkabel (2) umfasst, das sich außerhalb des Gehäuses (1) erstreckt, wobei das Gehäuse (1) einen unteren Teil (10) aufweist, der dazu vorgesehen ist, auf einer Auflageebene zu ruhen, wobei das Gehäuse (1) eine Außenwand (11) umfasst, die einen Außenhohlraum (20) zum Aufwickeln eines Teils des Netzkabels (2) aufweist, wobei der Außenhohlraum (20) außerhalb des unteren Teils (10) eingerichtet ist, wobei der Außenhohlraum (20) in einem gewölbten Abschnitt (12) der Außenwand (11) angelegt ist, **dadurch gekennzeichnet, dass** die Außenwand (11) einen konvexen Außenabschnitt (13) aufweist, der den Außenhohlraum (20) umgibt, dass der Außenhohlraum (20) ringförmig ist, dass der Außenhohlraum (20) eine Umfangswand (22), die an den konvexen Außenabschnitt (13) angeschlossen ist, eine Bodenwand (23) und eine Innenwand (24) aufweist, und dass mindestens ein vorragendes Rückhalteelement (26) aus der Umfangswand (22) hervorgeht.

2. Haushaltsgerät nach Anspruch 1, **dadurch gekennzeichnet, dass** eine Öffnung (25) auf dem Boden des Außenhohlraums (20) in der Senkrechten zu dem vorragenden Rückhalteelement (26) oder jedes vorragenden Rückhalteelements (26) angelegt ist.

3. Haushaltsgerät nach einem der Ansprüche 1 oder 2, **dadurch gekennzeichnet, dass** es drei vorragende Rückhalteelemente (26) umfasst, die sternförmig eingerichtet sind, die aus der Umfangswand (22) des Außenhohlraums (20) hervorgehen.

4. Haushaltsgerät nach einem der Ansprüche 1 bis 3, **dadurch gekennzeichnet, dass** das Gehäuse (1) eine Schale (30) umfasst, in der der Außenhohlraum (20) gebildet ist.

5. Haushaltsgerät nach einem der Ansprüche 1 bis 4, **dadurch gekennzeichnet, dass** der Außenhohlraum (20) eine kreisförmige Geometrie aufweist.

6. Haushaltsgerät nach Anspruch 5, **dadurch gekennzeichnet, dass** der ringförmige Außenhohlraum (20) einen Kern (14) umgibt, der aus der Außenwand (11) hervorgeht.

7. Haushaltsgerät nach Anspruch 6, **dadurch gekennzeichnet, dass** der Kern (14) mindestens eine Kerbe (15) aufweist, um das Netzkabel (2) zwischen dem Teil des Netzkabels (2), der in dem ringförmigen Außenhohlraum (20) angelegt ist, und einem anderen Teil des Netzkabels (2), der sich außerhalb des ringförmigen Hohlraums (20 erstreckt, zu halten.

8. Haushaltsgerät nach Anspruch 7, **dadurch gekennzeichnet, dass** die Kerbe (15) in den ringförmigen Außenhohlraum (20) mündet.

9. Haushaltsgerät nach einem der Ansprüche 7 oder 8, **dadurch gekennzeichnet, dass** das Netzkabel (2) einen nicht kreisförmigen Querschnitt umfasst, der ein großes Maß (L) und ein kleines Maß (S) aufweist, und dass die Kerbe (15) eine Breite (W) kleiner als das größere Maß (L) und größer als das kleinere Maß (S) aufweist.

10. Haushaltsgerät nach einem der Ansprüche 7 bis 9, **dadurch gekennzeichnet, dass** die Kerbe (15) in den ringförmigen Außenhohlraum (20) gegenüber dem oder einem der vorragenden Rückhalteelemente (26) mündet.

11. Haushaltsgerät nach einem der Ansprüche 1 bis 10, **dadurch gekennzeichnet, dass** eine Passage (27) für das Netzkabel (2) in einer Innenwand (21) des Außenhohlraums (20) angelegt ist.

12. Haushaltsgerät nach einem der Ansprüche 4 und 11, **dadurch gekennzeichnet, dass** die Schale (30) ausgehend von einem Außenrand (31) bis zu der Passage (27) gespaltet ist.

13. Haushaltsgerät nach einem der Ansprüche 11 oder 12, **dadurch gekennzeichnet, dass** die Passage (27) in einer Bodenwand (23) des Außenhohlraums (20) angelegt ist.

## Claims

1. Electric household appliance, in particular a household cooking appliance, comprising a casing (1) and an electrical power cord (2) extending out of the casing (1), the casing (1) having a lower portion (10) designed to rest on a bearing plane, the casing (1) comprising an outer wall (11) having an outer cavity (20) for winding a portion of the electrical power cord (2), the outer cavity (20) is arranged outside the lower portion (10), the outer cavity (20) is arranged in a bulged portion (12) of the outer wall (11), **characterised in that** the outer wall (11) has a convex outer portion (13) surrounding the outer cavity (20), **in that** the outer cavity (20) is annular, **in that** the outer cavity (20) has a peripheral wall (22) connected to the convex outer portion (13), a bottom wall (23) and an inner wall (24), and **in that** at least one prominent retaining member (26) comes from the peripheral wall (22).

2. Electrical household appliance according to claim 1, **characterised in that** an opening (25) is arranged at the bottom of the outer cavity (20) just under the prominent retaining member (26) or of each prominent retaining member (26).

3. Electrical household appliance according to one of claims 1 or 2, **characterised in that** it comprises three prominent retaining members (26) arranged in a star coming from the peripheral wall (22) of the outer cavity (20).

4. Electrical household appliance according to one of claims 1 to 3, **characterised in that** the casing (1) comprises a shell (30) wherein is formed the outer cavity (20).

5. Electrical household appliance according to one of claims 1 to 4, **characterised in that** the outer cavity (20) has a circular geometry.

6. Electrical household appliance according to claim 5, **characterised in that** the annular outer cavity (20) surrounds a core (14) coming from the outer wall (11).

7. Electrical household appliance according to claim 6, **characterised in that** the core (14) has at least one notch (15) for maintaining the electrical power cord (2) between the portion of the electrical power cord (2) arranged in the annular outer cavity (20) and another portion of the electrical power cord (2) extending to the outside of the annular outer cavity (20).

8. Electrical household appliance according to claim 7, **characterised in that** the notch (15) opens out into the annular outer cavity (20).

9. Electrical household appliance according to one of claims 7 or 8, **characterised in that** the electrical power cord (2) comprises a non-circular cross-section having a large dimension (L) and a small dimension (S) and **in that** the notch (15) has a width (W) less than the smallest dimension (L) and greater than the smallest dimension (S).

10. Electrical household appliance according to one of claims 7 to 9, **characterised in that** the notch (15) opens out into the annular outer cavity (20) facing the or one of the prominent retaining members (26).

11. Electrical household appliance according to one of claims 1 to 10, **characterised in that** a passage (27) for the electrical power cord (2) is arranged in an inner wall (21) of the outer cavity (20).

12. Electrical household appliance according to claims 4 and 11, **characterised in that** the shell (30) is split from an outer edge (31) to the passage (27).

13. Electrical household appliance according to one of claims 11 or 12, **characterised in that** the passage (27) is arranged in a bottom wall (23) of the outer cavity (20).
